# EUROPÄISCHE PATENTSCHRIFT

(11) **EP 3 676 139 B1**
(45) Veröffentlichungstag und Bekanntmachung des Hinweises auf die Patenterteilung: **12.10.2022**
(21) Anmeldenummer: 18765034.6
(22) Anmeldetag: 21.08.2018
(51) Int. Cl.: B60T 13/66, B60T 17/22

(54) **VERFAHREN UND EINRICHTUNG ZUR ERMITTLUNG VON BREMSUNGSRELEVANTEN IST-WERTEN EINES SCHIENENFAHRZEUGES FÜR DIE DURCHFÜHRUNG EINER VERZÖGERUNGSGEREGELTEN BREMSUNG MIT VERTEILTER SENSORIK**
METHOD AND EQUIPMENT FOR DETERMINING BRAKING-RELEVANT ACTUAL VALUES OF A RAIL VEHICLE FOR THE PERFORMANCE OF CONTROLLED-RETARDATION BRAKING WITH DISTRIBUTED SENSORS
PROCÉDÉ ET DISPOSITIF DE DÉTERMINATION DE VALEURS RÉELLES D'UN VÉHICULE FERROVIAIRE CONCERNANT LE FREINAGE POUR LA MISE EN OEUVRE D'UN FREINAGE À DÉCÉLÉRATION CONTROLÉE À CAPTEURS REPARTIS

(30) Priorität: 31.08.2017 DE 102017119991
(43) Veröffentlichungstag der Anmeldung: 08.07.2020
(73) Patentinhaber: KNORR-BREMSE Systeme für Schienenfahrzeuge GmbH, 80809 München (DE)
(72) Erfinder: TOMBERGER, Christoph, 80469 München (DE); FRIESEN, Ulf, 85579 Neubiberg (DE)
(86) Internationale Anmeldenummer: PCT/EP2018/072580
(87) Internationale Veröffentlichungsnummer: WO 2019/042830

(56) Entgegenhaltungen:
- WO-A2-2013/034731
- DE-A1-102011 052 545
- DE-A1-102015 110 053
- US-A1- 2017 232 943

## Beschreibung

Die Erfindung betrifft ein Verfahren sowie eine Einrichtung zur Ermittlung von bremsungsrelevanten IST-Werten eines aus vielen Wagen bestehenden Zugverbands, insbesondere Schienenfahrzeugs, und für die Durchführung einer verzögerungsgeregelten Bremsung des Zugverbands, bei welchem zumindest dessen Längsverzögerung als IST-Wert berücksichtigt wird, woraus durch einen Verzögerungsregler nach Maßgabe eines vorgegebenen SOLL-Wertes einer gewünschten Bremsverzögerung ein die Regelabweichung ausgleichender Stellwert für ein oder mehrere Stellglieder der Bremse ermittelt wird.

Das Einsatzgebiet der vorliegenden Erfindung erstreckt sich vornehmlich auf den Schienenfahrzeugbau. Die gewöhnlich aus einzelnen Wagen zusammengesetzten Zugverbände müssen im Verkehr vorgegebene Bremswege einhalten und insbesondere an ihnen zuvor signalisierten Punkten zum Stehen kommen. Die Bremsung eines Schienenfahrzeugs erfolgt nach genau definierten Kriterien, unter anderem Verzögerungskennlinien, deren Einhaltung relevant für die Sicherstellung des wirtschaftlichen und sicheren Betriebs des Schienenfahrzeugs ist. Bei jeder Bremsung eines modernen Schienenfahrzeugs sind verschiedene Bremstypen beteiligt, beispielsweise Reibungsbremsen, elektrodynamische Bremsen, Magnetschienenbremsen oder Wirbelstrombremsen. Jede dieser Bremsen hat spezifische Vorzüge, beispielsweise einen Geschwindigkeits- oder Leistungsbereich, in dem eine effiziente und verschleißminimale Bremsung möglich ist. Jeder Bremstyp weist dabei spezifische Toleranzen und Ungenauigkeiten in der Umsetzung der Bremskraft auf, was zu ungewünschten Variationen der erreichten Bremskraft im Verlauf von Bremsvorgängen führt.

Vor diesem Hintergrund würde die exakte Dosierung einer Bremsung eine Rückkopplung der tatsächlich ausgeübten Bremskraft erfordern, indem diese beispielsweise dem Fahrzeugführer über eine Anzeige im Führerstand mitgeteilt oder direkt einer elektronischen Regelschleife für die Bremskraft als IST-Wert zugeführt wird. Speziell bei gleichzeitigem Zusammenwirken mehrerer Bremstypen lässt sich jedoch die von jeder einzelnen Bremse ausgeübte Bremskraft nicht direkt messen, sondern nur über einen Umweg mit entsprechenden Ungenauigkeiten, etwa über die aufgenommene elektrische Leistung, über einen Bremszylinderdruck oder über Materialdehnungen. Der physikalische Zusammenhang zwischen diesen Größen und der Bremskraft ist häufig nicht linear und unterliegt zudem systematischen und zufälligen Schwankungen.

Aus der DE 10 2011 052 545 A1 geht eine technische Lösung hervor, mit welcher zur Lösung der vorgenannten Problematik die für die Längsverzögerung des Fahrzeugs repräsentativen Werte als IST-Werte verwendet werden, um über eine Regelschleife einen vorgegebenen SOLL-Werte für die Längsverzögerung des Fahrzeugs anzustreben. Es wird also die Auswirkung einer Bremsung in Form einer Verzögerung auf Fahrzeugebene geregelt. Allerdings liefert diese Regelung nicht die tatsächlich wirksame Bremskraft. Die Regelung auf einen SOLL-Wert für die Längsverzögerung des Fahrzeugs hat zudem die Nebenwirkung, dass in der Steigung der Fahrstrecke die topologiebedingte mögliche Verzögerung nicht ausgeschöpft wird, und dass im Gefälle einer Fahrstrecke die Bremse überbeansprucht wird.

Die DE 10 2015 110 053 A1 schlägt zur Lösung dieser Problematik vor, dass zusätzlich zur Erfassung der auf das Fahrzeug wirkenden Längsverzögerung auch die durch eine Steigung oder Gefälle der Fahrstrecke hervorgerufene Hangabtriebskraft ermittelt wird, so dass die Bremskraft auf Basis der Längsverzögerung des Fahrzeugs sowie der Hangabtriebskraft kalkuliert wird.

Die US 2017/232943 A1 offenbart einen Zugverband mit mehreren angetriebenen Fahrzeugen und mehreren nicht angetriebenen Fahrzeugen. Die angetriebenen und die nicht angetriebenen Wagen des Zugverbands können dabei im Verlauf der geplanten Strecke durch den Antrieb und die Bremsen derart gesteuert werden, dass bestimmte Ziele für diese Strecke erfüllt werden.

Aus der WO 2013/034731 A2 ist eine Steuereinrichtung für ein Schienenfahrzeug bekannt, welche aufgrund von Verzögerungsdaten, Fahrwiderstandsdaten und Bremsdaten eine Bremskraft einer dynamischen Bremseinrichtung ermittelt.

Die Längsverzögerung des Fahrzeugs ist die kinematische Verzögerung entlang der Fahrzeuglängsachse. Die Fahrzeuglängsachse ist stets parallel zur Fahrstrecke, so dass sich diese beim Übergang in eine Steigung oder in ein Gefälle mit der Fahrstrecke neigt.

Die Hangabtriebskraft ist diejenige Kraft, die bei einer Neigung der Fahrstrecke aus der Ebene heraus, also durch Steigung oder Gefälle, in Fahrtrichtung auf das Fahrzeug wirkt. Die senkrecht nach unten gerichtete Gewichtskraft des Fahrzeugs im Schwerefeld der Erde lässt sich als Vektorsumme aus dieser Hangabtriebskraft und einer zum Fahrzeug senkrechten, vom Fahrzeug auf den Fahrweg übertragenen Normalkraft ansehen.

Die Verwendung eines Verzögerungssensors, der auch statisch die Erdbeschleunigung mit misst zur Ermittlung der Längsverzögerung des Fahrzeugs hat den Vorteil, dass Steigungen und Gefälle nicht zu einer Änderung des Sensorsignals führen, so dass der Einfluss von Steigung und Gefälle auf die Längsverzögerung des Fahrzeugs nicht berücksichtigt wird. Das bedeutet, dass die aufgrund einer Steigung auftretende Verzögerung des Fahrzeugs, wie sie beim reinen Rollen auch auftreten würde, im Sensorsignal nicht auftritt. Der Sensor misst nur zusätzliche Verzögerungen, welche beispielsweise durch die Bremsung auftreten. Wenn dies nicht der Fall ist, die Verzögerung also beispielsweise anhand der Fahrzeuggeschwindigkeit ermittelt und geregelt wird, führt dies dazu, dass der Bremsweg unabhängig von Steigungen eingestellt wird. Das bedeutet, dass der Bremsweg in der Ebene gleich lang ist wie in Steigungen. Das ist nicht wünschenswert, da die Vorsignalabstände zwischen Vor- und Hauptsignal aufgrund länderspezifischer Vorschriften an die Steigung des Fahrwegs angepasst sein könnten. Außerdem würde das Fahrzeug in Steigungen entbremst werden und sich somit unnatürlich verhalten. Die Verwendung eines Verzögerungssensors zur Ermittlung der Längsverzögerung des Fahrzeugs im Rahmen einer Regelung der Verzögerung führt also zu einem gewünschten Verhalten des Gesamtsystems, indem die durch Steigung und Gefälle auftretenden Längsbeschleunigungen des Fahrzeugs im IST-Signal des Verzögerungssensors nicht berücksichtigt werden.

Bei aus vielen einzelnen Wagen bestehenden langen Zugverbänden kann es bei einem zentral an beliebiger Stelle im Zugverband, vorzugsweise dem Führungsfahrzeug, angeordneten Verzögerungssensor im Falle einer Steigungsänderung der Fahrstrecke zu einer abweichenden Interpretation der Bremskraft kommen, da hintere Wagen des Zugverbands diesen noch anschieben oder abbremsen können. Denn insbesondere bei langen Zugverbänden und den in der Infrastruktur auftretenden örtlichen Gefälleänderungen ist es nicht gewährleistet, dass alle Wagen des Zugverbands sich zu jedem Zeitpunkt im selben oder auch nur annähernd selben Gefälle oder Steigung befinden. Die auf das Schienenfahrzeug wirkende Längsbeschleunigung aufgrund von Gefälle oder Steigung ergibt sich aus dem Gefälle bzw. Steigung, in dem sich jeder einzelne Wagen befindet. Jeder Wagen kann sich bei Änderungen von Steigung oder Gefälle in einem anderen Bereich befinden.

Beispielsweise wird bei Überfahrt einer Kuppe der Einfluss der Gefälleänderung auf die Längsverzögerung des Zugverbandes variieren. In der Steigung wirkt diese verzögernd. Auf der Kuppe, wobei der führende Wagen sich im Gefälle und der letzte Wagen sich noch in der Steigung befindet, hat das Gefälle gar keine Auswirkung auf die Längsverzögerung des Zuges, gleich wie in der Ebene und im nachfolgenden Gefälle wird der Zug beschleunigt. Bremst das Schienenfahrzeug während einer Gefälleänderung mit aktiviertem Verzögerungsregler, so ergibt sich bei der Messung der Längsverzögerung mittels Beschleunigungssensors an einer zentralen Stelle des Zuges ein Fehler zwischen Messwert und der tatsächlich erwarteten gefälle- bzw. steigungskompensierten Verzögerung. Dieser Fehler kann zu einer signifikanten Bremswegverlängerung des Zuges führen.

Es ist die Aufgabe der vorliegenden Erfindung, ein Verfahren sowie eine Einrichtung zur verteilten Messwerterfassung für eine Verzögerungsregelung, insbesondere eines Schienenfahrzeugs, zu schaffen, welches/welche eine genaue Bremsung bei aus mehreren Wagen bestehenden Zugverbänden sicherstellt.

Die Aufgabe wird ausgehend von einem Verfahren gemäß dem Oberbegriff von Anspruch 1 in Verbindung mit dessen kennzeichnenden Merkmalen gelöst. Einrichtungstechnisch wird die Aufgabe durch Anspruch 4 gelöst. Die jeweils rückbezogenen abhängigen Ansprüche geben vorteilhafte Weiterbildungen der Erfindung wieder.

Die Erfindung schließt die technische Lehre ein, dass die Längsverzögerung durch mehrere entlang des Zugverbands in mindestens zwei unterschiedlichen Wagen positionierte Verzögerungssensoren zur Ermittlung der jeweils örtlichen Längsverzögerung gemessen wird, wobei durch eine zentrale Messwerterfassungseinheit die auf den gesamten Zugverband bezogene Längsverzögerung als IST-Wert berechnet wird.

Mit anderen Worten wird der IST-Wert, welcher die Basis für die Verzögerungsregelung ist, nicht nur aus einer zentral angeordneten Messquelle für die aktuelle Verzögerung des Schienenfahrzeuges gebildet, sondern aus einer Mehrzahl von Verzögerungssensoren, welche verteilt entlang des Schienenfahrzeuges platziert sind. Die Bildung des IST-Werts erfolgt dabei aus den einzelnen verteilt gewonnenen Messsignalen. Zusätzliche oder ergänzende Kalkulationsschritte können ebenfalls bei der Bildung des IST-Werts berücksichtigt werden, wie beispielsweise eine messtechnisch ermittelte oder kalkulatorisch abgeleitete Längsneigung des Schienenfahrzeugs, beispielsweise zum Zwecke der Plausibilisierung. Desweiteren ist auch eine Plausibilisierung der Sensorsignale für eine bessere Fehlererkennung möglich. Der gebildete IST-Wert ist dabei umso höherwertiger, je mehr Verzögerungssensoren entlang des Schienenfahrzeugs verteilt werden, wobei ein Verzögerungssensor pro Wagen des Zugverbands das Maximum der erreichbaren Genauigkeit darstellt. Um die mit der erfindungsgemäßen Lösung verbundenen Vorteile zu erzielen, ist es auch denkbar, dass mindestens im ersten Wagen und im letzten Wagen des Zugverbands ein Verzögerungssensor angeordnet ist. Die erfindungsgemäße Lösung eignet sich insbesondere bei langen Schienenfahrzeugen mit vielen Wagen, welche auf Fahrstrecken mit signifikanten Steigungsänderungen unterwegs sind.

Gemäß einer weiteren die Erfindung verbessernden Maßnahme wird vorgeschlagen, dass die verteilt über den Zugverband angeordneten Verzögerungssensoren über eine durch alle Wagen des Zugverbands durchgeschleifte Datenbusleitung mit der zentralen Messwerterfassungseinheit verbunden sind, welche sich vorzugsweise im vordersten Zugteil, beispielsweise dem Führungsfahrzeug, befindet. Durch Nutzung eines Datenbusses lässt sich die Anzahl der zugeschalteten Verzögerungssensoren je nach Anzahl der angekoppelten Wagen flexibel konfigurieren.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Seitenansicht eines auf einer Steigungsstrecke fahrenden Zugverbands,
- Fig. 2: eine schematische Seitenansicht des Zugverbands gemäß Fig. 1 mit verteilt entlang der Zuglänge angeordneten Verzögerungssensoren nach einer ersten Ausführungsform,
- Fig. 3: eine schematische Seitenansicht des Zugverbands gemäß Fig. 1 mit verteilt entlang der Zuglänge angeordnete Verzögerungssensoren nach einer zweiten Ausführungsform, und
- Fig. 4: eine Blockschaltbilddarstellung einer Verzögerungsregelung.

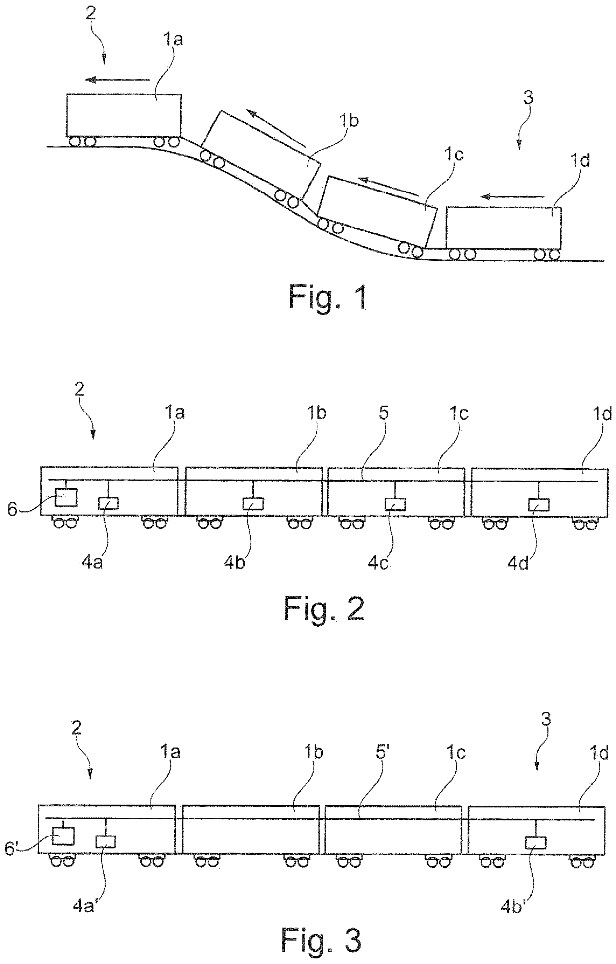

Fig. 1 zeigt einen aus vielen Wagen 1a bis 1d bestehenden Zugverband in Form eines Schienenfahrzeugs. Jedem der Wagen 1a bis 1d ist die individuelle Fahrrichtung per Vektorpfeil zugeordnet. Demnach befindet sich der Zugverband auf einer Steigungsfahrt, bei welcher der Wagen 1a des vordersten Zugteils 2 momentan die maximale Höhe erreicht hat, während sich die mittleren Wagen 1b und 1c auf einer Steigungsstrecke befinden und der das hinterste Zugteil 3 bildende Wagen 1d sich noch am Beginn der Steigungsstrecke befindet.

Fig. 2 zeigt den aus den Wagen 1a bis 1d bestehenden Zugverband mit einer hierin integrierten Einrichtung zur Ermittlung von bremsungsrelevanten IST-Werten. Zur Messung der Längsverzögerung ist in jedem der Wagen 1a bis 1d ein diesem zugeordneter Verzögerungssensor 4a bis 4d angeordnet. Jeder Verzögerungssensor 4a bis 4d misst die wagenbezogene Längsverzögerung, welche je nach Steigerungsgrad variieren kann. Alle Verzögerungssensoren 4a bis 4d sind über eine durch alle Wagen 1a bis 1d des Zugverbands durchgeschleifte Datenbusleitung 5 mit einer zentralen Messwerterfassungseinheit 6 verbunden, welche sich hier im vordersten Zugteil 2 an zentraler Position befindet.

Gemäß Fig. 3 sind im Gegensatz zu dem vorstehend beschriebenen Ausführungsbeispiel lediglich im ersten Wagen 1a sowie im letzten Wagen 1d des Zugverbands jeweils ein Verzögerungssensor 4a' bzw. 4b' angeordnet. Somit wird die örtliche Längsverzögerung im Bereich des vordersten Zugteils 2 sowie des hintersten Zugteils 3 ermittelt. Die Messwertsignale werden auch hier über eine durch alle Wagen 1a bis 1d des Zugverbandes durchgeschleifte Datenbusleitung 5' mit einer zentralen Messwerterfassungseinheit 6' verbunden.

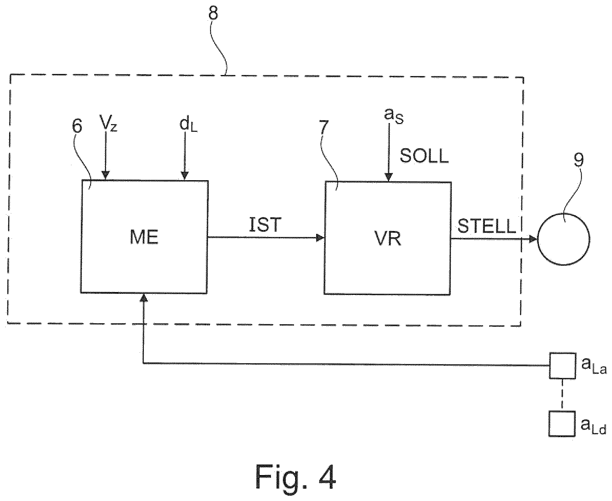

Nach Fig. 4 ist der Messwerterfassungseinheit 6 ein Verzögerungsregler 7 zugeordnet, welcher zur Durchführung der verzögerungsgeregelten Bremsung des Zugverbandes dient, wobei beide Baueinheiten in einer Reglereinheit 8 integriert angeordnet sind. Die Reglereinheit 8 ist - in dem hier nicht weiter dargestellten - vordersten Zugteil 2 des Zugverbandes angeordnet, vorzugsweise im elektronischen Bremssteuergerät integriert.

Die durch die mehreren - hier nicht weiter dargestellten - Verzögerungssensoren ermittelten Längsverzögerungen a_{La} bis a_{Ld} werden eingangsseitig der zentralen Messwerterfassungseinheit 6 zugeführt. Zum Zwecke der Plausibilisierung oder dergleichen gehen der Messwerterfassungseinheit 6 auch andere Messwerte zu, beispielsweise ein Messwert der Längsneigung α_{L} sowie der Geschwindigkeit vz des Schienenfahrzeugs. Aus dem durch die Messwerterfassungseinheit 6 anhand der Messgrößen ermittelten IST-Wert kalkuliert ein nachgeschalteter Verzögerungsregler 7 zur Verzögerungs-/Verzögerungskraftregelung durch Vergleich mit einem vorgegebenen SOLL-Wert einer gewünschten Bremsverzögerung die hieraus resultierende Regelabweichung und gibt diese in Form eines STELL-Werts als Ansteuerungssignal einem Stellglied 9 der Bremse vor, beispielsweise einem Druckregelventil zur Betätigung eines pneumatischen Bremszylinders.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, andere Stellglieder als eine pneumatische Bremse im Rahmen der verzögerungsgeregelten Bremsung zu nutzen, beispielsweise lässt sich hiermit auch eine elektrodynamische Bremse, eine Wirbelstrombremse oder dergleichen ansteuern.

### BEZUGSZEICHENLISTE

- 1: Wagen
- 2: vorderster Zugteil
- 3: hinterster Zugteil
- 4: Verzögerungssensor
- 5: Datenbusleitung
- 6: Messwerterfassungseinheit
- 7: Verzögerungsregler
- 8: Reglereinheit
- 9: Stellglied

- aL: Längsverzögerung
- αL: Längsneigung
- vz: Geschwindigkeit
- as: SOLL-Wert (für Verzögerungsregelung)

## Patentansprüche

1. Verfahren zur Ermittlung von bremsungsrelevanten IST-Werten eines aus vielen Wagen (1a - 1d) bestehenden Zugverbands, insbesondere Schienenfahrzeuges, und für die Durchführung einer verzögerungsgeregelten Bremsung des Zugverbands, bei welchem zumindest die Längsverzögerung (a_{L}) als IST-Wert berücksichtigt wird, woraus durch einen Verzögerungsregler (7) nach Maßgabe eines vorgegebenen SOLL-Wertes einer gewünschten Bremsverzögerung ein die Regelabweichung ausgleichender STELL-Wert für ein Stellglied (9) der Bremse ermittelt wird,
**dadurch gekennzeichnet, dass**
- die Längsverzögerung (a_{L}) durch mehrere entlang des Zugverbands in mindestens zwei unterschiedlichen Wagen (1a, 1d) positionierte Verzögerungssensoren (4a', 4b'; 4a - 4d) zur Ermittlung der jeweils örtlichen Längsverzögerung (a_{La-d}) gemessen wird, wobei anschließend
- durch eine zentrale Messwerterfassungseinheit (6) die auf den gesamten Zugverband bezogene Längsverzögerung (a_{L}) als IST-Wert berechnet wird.

2. Verfahren nach Anspruch 1,
**dadurch gekennzeichnet, dass**
die auf den gesamten Zugverband bezogene Längsverzögerung (a_{L}) durch Mittelwertbildung aus den örtlichen Längsverzögerung (a_{La-e}) errechnet wird.

3. Verfahren nach Anspruch 1,
**dadurch gekennzeichnet, dass**
bei der Kalkulation des bremsungsrelevanten IST-Wertes für die verzögerungsgeregelte Bremsung auch die messtechnisch ermittelte oder kalkulatorisch abgeleitete Längsneigung (a_{L}) und/oder die Geschwindigkeit (vz) des Schienenfahrzeuges mit berücksichtigt wird.

4. Einrichtung zur Ermittlung von bremsungsrelevanten IST-Werten eines aus vielen Wagen (1a-1d) bestehenden Zugverbands, insbesondere Schienenfahrzeuges, für die Durchführung einer verzögerungsgeregelten Bremsung des Zugverbands, welche zumindest die Längsverzögerung (a_{L}) als IST-Wert berücksichtigt, woraus ein Verzögerungsregler (7) nach Maßgabe eines vorgegebenen SOLL-Wertes (aₛ) einer gewünschten Bremsverzögerung ein die Regelabweichung ausgleichenden STELL-Wert für ein Stellglied (9) der Bremse ausgibt,
**dadurch gekennzeichnet, dass**
- zur Messung der Längsverzögerung (a_{L}) mehrere entlang des Zugverbands in mindestens zwei unterschiedlichen Wagen (1a, 1d) positionierbare Verzögerungssensoren (4a', 4b'; 4a -4d) zur Ermittlung der jeweils örtlichen Längsverzögerung (a_{La-d}) vorgesehen sind, wobei
- eine zentrale Messwerterfassungseinheit (6; 6') die auf den gesamten Zugverband bezogene Längsverzögerung (a_{L}) als IST-Wert berechnet.

5. Einrichtung nach Anspruch 4,
**dadurch gekennzeichnet, dass**
in jedem Wagen (1a - 1d) des Zugverbands mindestens ein Verzögerungssensor (4a - 4d) angeordnet ist.

6. Einrichtung nach Anspruch 4,
**dadurch gekennzeichnet, dass**
in dem ersten Wagen (1a) und in dem letzten Wagen (1d) des Zugverbands mindestens ein Verzögerungssensor (4a', 4b') angeordnet ist.

7. Einrichtung nach Anspruch 4,
**dadurch gekennzeichnet, dass**
die Verzögerungssensoren (4a', 4b'; 4a - 4d) über eine durch alle Wagen (1a - 1d) des Zugverbands durchgeschleifte Datenbusleitung (5; 5') mit der zentralen Messwerterfassungseinheit (6; 6') verbunden sind.

8. Zugverband mit vielen Wagen (1a - 1d), insbesondere Schienenfahrzeug, mit einer Einrichtung nach einem der Ansprüche 4 oder 7,
**dadurch gekennzeichnet, dass**
die Messwerterfassungseinheit (6) und der Verzögerungsregler (7) in einer Reglereinheit (8) integriert sind, das in dem vordersten Zugteil (2) angeordnet ist.

## Claims

1. Method for determining braking-related actual values of a train assembly consisting of a large number of cars (1a-1d), in particular a rail vehicle, and for carrying out deceleration-controlled braking of the train assembly, in which method at least the longitudinal deceleration (a_{L}) is taken into account as an actual value from which a manipulated value which compensates for the control deviation is determined for an actuator (9) of the brake by a deceleration controller (7) in accordance with a prespecified setpoint value of a desired braking deceleration,
**characterized in that**
- the longitudinal deceleration (a_{L}) is measured by a plurality of deceleration sensors (4a', 4b'; 4a-4d), which are positioned along the train assembly in at least two different cars (1a, 1d), for determining the respectively local longitudinal deceleration (a_{La-d}), wherein subsequently
- the longitudinal deceleration (a_{L}) which relates to the entire train assembly is calculated as an actual value by a central measured value detection unit (6).

2. Method according to Claim 1,
**characterized in that**
the longitudinal deceleration (a_{L}) which relates to the entire train assembly is calculated from the local longitudinal deceleration (a_{La-e}) by calculating a mean value.

3. Method according to Claim 1,
**characterized in that**
the longitudinal tilt (a_{L}) which is determined by measurement or derived by calculation and/or the speed (v_{z}) of the rail vehicle are/is also taken into account when calculating the braking-related actual value for the deceleration-controlled braking.

4. Device for determining braking-related actual values of a train assembly consisting of a large number of cars (1a-1d), in particular a rail vehicle, for carrying out deceleration-controlled braking of the train assembly, which device takes into account at least the longitudinal deceleration (a_{L}) as an actual value from which a deceleration controller (7) outputs a manipulated value which compensates for the control deviation for an actuator (9) of the brake in accordance with a prespecified setpoint value (as) of a desired braking deceleration,
**characterized in that**
- a plurality of deceleration sensors (4a', 4b'; 4a-4d), which can be positioned along the train assembly in at least two different cars (1a, 1d), for determining the respectively local longitudinal deceleration (a_{La-d}) are provided for measuring the longitudinal deceleration (a_{L}), wherein
- a central measured value detection unit (6; 6') calculates the longitudinal deceleration (a_{L}) which relates to the entire train assembly as an actual value.

5. Device according to Claim 4,
**characterized in that**
at least one deceleration sensor (4a-4d) is arranged in each car (1a-1d) of the train assembly.

6. Device according to Claim 4,
**characterized in that**
at least one deceleration sensor (4a', 4b') is arranged in the first car (1a) and in the last car (1d) of the train assembly.

7. Device according to Claim 4,
**characterized in that**
the deceleration sensors (4a', 4b'; 4a-4d) are connected to the central measured value detection unit (6; 6') via a data bus line (5; 5') which is looped through all cars (1a-1d) of the train assembly.

8. Train assembly comprising a large number of cars (1a-1d), in particular rail vehicle, having a device according to either of Claims 4 and 7,
**characterized in that**
the measured value detection unit (6) and the deceleration controller (7) are integrated in a controller unit (8) which is arranged in the frontmost train part (2).

## Revendications

1. Procédé de détermination de valeurs réelles, pertinentes pour le freinage, d'un convoi constitué de plusieurs voitures (la-1d), notamment d'un véhicule ferroviaire, et pour effectuer un freinage régulé en décélération du convoi, dans lequel on prend en compte comme valeurs réelles au moins la décélération (a_{L}) longitudinale en en déterminant, par un régleur (7) de décélération en fonction d'une valeur de consigne donnée à l'avance d'une décélération de freinage souhaitée, une valeur de réglage, compensant l'écart de réglage, d'un actionneur (9) du frein, **caractérisé en ce que**
- on mesure la décélération (a_{L}) longitudinale par plusieurs capteurs (4a', 4b' ; 4a-4d) de décélération placés le long du convoi dans au moins deux voitures (1a, 1d) différentes pour la détermination de la décélération (a_{La-d}) longitudinale locale respective, dans lequel ensuite
- par une unité (6) centrale de relevé de valeurs de mesure, on calcule comme valeur réelle la décélération (a_{L}) longitudinale rapportée à l'ensemble du convoi.

2. Procédé suivant la revendication 1,
**caractérisé en ce que**
l'on calcule la décélération (a_{L}) longitudinale rapportée à l'ensemble du convoi par la formation d'une valeur moyenne à partir des décélérations (a_{La-e}) longitudinales locales.

3. Procédé suivant la revendication 1,
**caractérisé en ce que**
lors du calcul de la valeur réelle, pertinente pour le freinage, pour le freinage régulé en décélération, on tient compte également de l'inclinaison (α_{L}) longitudinale déterminée par technique de mesure ou déduite par calcul et/ou de la vitesse (v_{z}) du véhicule ferroviaire.

4. Dispositif de détermination de valeurs réelles, pertinentes pour le freinage, d'un convoi constitué de plusieurs voitures (la-1d), notamment d'un véhicule ferroviaire, pour effectuer un freinage régulé en décélération du convoi, qui prend en compte comme valeur réelle au moins la décélération (a_{L}) longitudinale, dont un régleur (7) de décélération sort, en fonction d'une valeur (as) de consigne donnée à l'avance d'une décélération de freinage souhaitée, une valeur de réglage, compensant un écart de réglage, d'un actionneur (9) du frein,
**caractérisé en ce que**
- pour la mesure de la décélération (a_{L}) longitudinale, plusieurs capteurs (4a', 4b' ; 4a-4d), pouvant être placés le long du convoi dans au moins deux voitures (1a, 1d) différentes, sont prévus pour la détermination de la décélération (a_{La-d}) longitudinale locale respective, dans lequel
- une unité (6 ; 6') centrale de relevé de valeurs de mesure calcule comme valeur réelle la décélération (a_{L}) longitudinale rapportée à l'ensemble du convoi.

5. Dispositif suivant la revendication 4,
**caractérisé en ce qu'**
au moins un capteur (4a-4d) de décélération est disposé dans chaque voiture (1a-1d) du convoi.

6. Dispositif suivant la revendication 4,
**caractérisé en ce qu'**
au moins un capteur (4a', 4b') de décélération est disposé dans la première voiture (1a) et dans la dernière voiture (1d) du convoi.

7. Dispositif suivant la revendication 4,
**caractérisé en ce que**
les capteurs (4a', 4b' ; 4a-4d) de décélération sont reliés à l'unité (6 ; 6') centrale de relevé de valeurs de mesure par une ligne (5 ; 5') de bus de données traversant toutes les voitures (1a-1d) du convoi.

8. Convoi ayant plusieurs voitures (1a-1d), notamment véhicule ferroviaire comprenant un dispositif suivant l'une des revendications 4 ou 7,
**caractérisé en ce que**
l'unité (6) de relevé de valeurs de mesure et le régleur (7) de décélération sont intégrés en une unité (8) de régleur, qui est disposée dans la partie (2) la plus en avant du train.
